(19) Europäisches Patentamt
European Patent Office
Office européen des brevets

(11) EP 1 369 448 A1

(12) **EUROPÄISCHE PATENTANMELDUNG**

(43) Veröffentlichungstag:
**10.12.2003 Patentblatt 2003/50**

(51) Int Cl.[7]: **C08G 73/02**, B01J 19/18, B01J 19/24, B01F 5/02

(21) Anmeldenummer: **03011879.8**

(22) Anmeldetag: **27.05.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **07.06.2002 DE 10225349**
**10.03.2003 DE 10310287**

(71) Anmelder: **BAYER AG**
**51368 Leverkusen (DE)**

(72) Erfinder:
- **Meisel, Karlheinrich, Dr.**
  **51519 Odenthal (DE)**
- **Obendorf, Lars, Dr.**
  **51065 Köln (DE)**
- **Boehmer, Branislav, Dr.**
  **94121 Salzweg-Strasskirchen (DE)**
- **Thiele, Bernd**
  **51519 Odenthal (DE)**
- **Spaniol, Armin, Dr.**
  **51465 Bergisch Gladbach (DE)**
- **Fuchs, Dietmar**
  **50259 Pulheim (DE)**
- **Renner, Gerd-Friedrich, Dr.**
  **51515 Kürten (DE)**
- **Huebbe, Thomas**
  **51069 Kürten (DE)**

(54) **Verfahren zur Herstellung von polymeren Kondensaten und ihre Verwendung**

(57) Verfahren zur Herstellung von polymeren Kondensaten, dadurch gekennzeichnet, dass die Reaktionsmischung während der Kondensationsreaktion wenigstens einmal durch eine Zone hoher Energiedichte geführt wird, die eine Energiedichte von wenigstens $10^5$ J/m$^3$ aufweist.

EP 1 369 448 A1

## Beschreibung

Die Erfindung betrifft ein Verfahren zur Herstellung polymerer Kondensate insbesondere von deren wässrigen Lösungen, die so erhältlichen Produkte sowie ihre Verwendung.

Bei der Herstellung von polymeren Kondensaten, bei denen die niedermolekularen Anteile für die angestrebte Anwendung wirkungslos oder nur wenig wirksam sind, kann man versuchen, den Anteil der höhermolekularen, wirksamen Polymeren auf Kosten der wirkungslosen, niedermolekularen Polymere zu erhöhen. Ein möglicher Weg ist, diese niedermolekularen Kondensate weiter zu kondensieren.

Nachteilig dabei ist jedoch, dass bei der zwangsläufig entstehenden Verteilung der Molekulargewichte auch sehr hochmolekulare Polymere entstehen, die keine Wirksamkeit mehr besitzen, da sie zur Vergelung und/oder zum Ausfällen neigen. Letztere Eigenschaften machen das Polymergemisch in großem Maße unanwendbar.

Im Stand der Technik ist vielfach der Weg beschrieben worden, die Kondensation bis zu dem Beginn der Vergelung bzw. der Ausfällungen zu betreiben und die erhaltene Polymermischung dann von der wirkungslosen, niedermolekularen Polymerfraktion mittels Membranfiltration zu befreien (vgl. WO-A 00/67 884, DE-A-19 600 366, US-A-6 056 967 sowie EP-A-873 371). Der abgetrennte niedermolekulare Anteil kann dann erneut einer Polykondensation zugeführt werden.

Nachteil dieser Vergehensweise ist u.a. die dabei produzierte Abwasserlast.

Es hat nun die Aufgabe bestanden, ein alternatives Herstellungsverfahren für Polykondensate ohne die Nachteile des Standes der Technik bereitzustellen.

Es wurde nun ein Verfahren zur Herstellung von polymeren Kondensaten gefunden, das dadurch gekennzeichnet ist, dass die Reaktionsmischung während der Kondensationsreaktion wenigstens einmal durch eine Zone geführt wird, die eine Energiedichte von wenigstens $10^5$ J/m$^3$ aufweist.

Die nach dem erfindungsgemäßen Verfahren bevorzugt hergestellten Kondensate sind Polykationen und besitzen vorzugsweise eine mittlere Molmasse von 0,7 bis 1,5 Millionen g/mol.

Das erfindungsgemäße Verfahren kann sowohl für die Herstellung anionischer, neutraler als auch kationischer Produkte eingesetzt werden. Es kann kontinuierlich oder diskontinuierlich durchgeführt werden.

Das Aufbringen einer entsprechend hohen Energiedichte kann beispielsweise so realisiert werden, dass das Reaktionsgemisch kontinuierlich über einen Bypass entnommen, durch die Zone hoher Energiedichte geführt und der Reaktion anschließend wieder zurückgeführt wird.

Bevorzugt ist es, dass das Reaktorvolumen mindestens einmal umgewälzt wird. Besonders bevorzugt ist es, das Reaktorvolumen wenigstens 4 mal umzuwälzen. Dabei ist es vorteilhaft, die zum Aufbringen der notwendigen Energie zugeführte Energie durch einen Wärmetauscher im Bypass abzuführen. Besonders bevorzugt ist es, diesen Wärmetauscher vor dem Mischaggregat zu installieren, so dass das Reaktionsmedium vor der Zone hoher Energiedichte gekühlt wird.

Besonders vorteilhaft ist es, die zur Polykondensation benötigte Reaktionskomponente ebenfalls in den Bypass zu dosieren. Bevorzugt werden nach dieser Variante Reaktionstemperatur und Temperatur in der Zone durch Durchfluss - Wärmetauscher eingestellt.

Ebenso ist es möglich, ein Mischaggregat, das den erforderlichen Energieeintrag gewährleistet, in einem Reaktor anzubringen. Die zugeführte Energie kann nach dieser Variante entweder über die Kühlung des Kesselmantels oder über zusätzlich angebrachten Tauchkühler abgeführt werden.

Bevorzugt ist, eine Kaskade von Reaktoren hintereinander zu schalten und die Kondensation in dem ersten Reaktor der Kaskade wie in einer Batch - Reaktion bisher üblich durchzuführen, die Reaktionsmischung unter dem hohen Energieeintrag in den zweiten Reaktor zu leiten und dort die Reaktion gegebenenfalls unter Zugabe weiterer Eduktmengen weiterzuführen. Das Abführen der eingebrachten Energie kann dabei sowohl über einen Wärmetauscher vor und/oder hinter dem Mischaggregat erfolgen, als auch durch Kühlung des Kesselmantels oder durch einen Tauchkühler.

Dieses Prozedere kann über weitere Reaktoren der Kaskade wiederholt werden.

Geeignete Mischaggregate zeichnen sich dadurch aus, dass sie aufgrund ihrer Geometrie eine hohe lokale Energiedichte in Form von Strömungsenergie in das Produkt eintragen. Da für diese Aufgabe häufig hohe Drücke eingesetzt werden, werden diese Mischaggregate auch als Hochdruckhomogenisatoren bezeichnet. Mischaggregate, die besonders geeignet für solche Aufgaben sind, sind statische Mischer und/oder Düsenaggregate. Insbesondere geeignet sind einfache Lochblenden, Flachdüsen, Zackendüsen, Messerkantendüsen, Microfluidizer, wie sie in US-A 4 533 254 beschrieben sind, Mikrostrukturmischer, Mikrostrukturbauteile oder Strahldispergatoren. Weitere Geometrien, die nach dem gleichen Prinzip dieser oder anderer Düsenaggregate arbeiten, sind dem Fachmann leicht zugänglich. Am Beispiel einer einfachen Lochblende sei das Funktionsprinzip dieser Düsenaggregate erklärt. Der Produktstrom wird durch eine Pumpe unter Druck gesetzt und durch die Blende entspannt. Aufgrund der plötzlichen Querschnittsverengung wird der Produktstrom in der Düse stark beschleunigt. Je nach Geometrie der Blende können dabei zweierlei Kräfte auf das Produkt einwirken. Entweder wird der Produktstrom so stark beschleunigt, dass die Strömung

in der Düse turbulent ist, oder, im Fall einer laminaren Strömung, kommt es in der Düse zur Ausbildung einer sogenannten Dehnströmung.

In Fig. 1 bis 5 der DE-A 10 108 484 sind weitere Beispiele von geeigneten Düsenaggregaten dargestellt. Fig. 1 zeigt eine Flachdüse, in Fig. 2 ist eine Messerkantendüse dargestellt, während in Fig. 3 ein Microfluidizer wiedergegeben ist. In Fig. 4 ist eine Zackendüse abgebildet und in Fig. 5 wird ein Strahldispergator gezeigt.

Neben diesen Mischaggregaten, die eine hohe Energiedichte in Form von Strömungsenergie in das Produkt eintragen, sind ebenfalls solche Apparate geeignet, die eine hohe Energiedichte durch rotierende Teile einbringen, wie z.B. Rotor-Stator-Systeme, Kugelmühlen, Kolloidmühlen, Nassrotormühlen, Zahnkranz-Dispergiermaschinen, Intensivmischer, die das Prinzip der Zahnkranz-Dispergiermaschinen einsetzen jedoch in axialer Richtung durchströmt werden, oder andere, rotierende Teile einsetzende Apparate, die dem Fachmann leicht zugänglich sind und für die gestellte Aufgabe eingesetzt werden können.

Weiterhin seien noch jene Mischaggregate erwähnt, die wie z.B. Ultraschalldesintegratoren durch Kavitation hohe Energiedichten erzeugen. Unter Kavitation wird dabei das Entstehen und Kollabieren von Dampfblasen in einer Flüssigkeit verstanden, in welcher ein isothermer Druckabfall zunächst bis zum Dampfdruck der Flüssigkeit erfolgt und der Druck anschließend wieder ansteigt. Durch den Druckanstieg kollabieren die entstandenen Gasblasen wieder. Bei dem Kollabiervorgang wird die zerkleinerungswirksame Energie freigesetzt. Durch Zusatz einer Flüssigkeit mit einem geeigneten Dampfdruck kann daher auch auf diese Weise beim Reaktionsprodukt die notwendige Energiedichte erreicht werden.

Darüber hinaus können auch Kombinationen der genannten oder ähnlicher Mischaggregate eingesetzt werden.

Es hat sich gezeigt, dass es für die Herstellung von polymeren Kondensaten durch das erfindungsgemäße Verfahren bevorzugt ist, bestimmte Mindestwerte für Energiedichte und vorzugsweise auch Gesamtverweilzeiten (Produkt aus Verweilzeit pro Durchgang und Anzahl der Durchgänge) im Mischaggregat nicht zu unterschreiten.

Die Energiedichte $E_v$ wird dabei im Falle der Düsenaggregate durch die an der Düse wirksame Druckdifferenz (Homogenisierdruck) $\Delta p_H$ bestimmt:

$$E_v\ [J/m^3] = \Delta p_H$$

Für Mischaggregate, die nach dem Prinzip der Rotor-Stator-Systeme arbeiten, kann die Energiedichte experimentell aus der eingebrachten Leistung P, der Dichte p, dem dispergierwirksamen Volumen $V_{sp}$ und der Verweilzeit t in diesem Volumen folgendermaßen berechnet werden:

$$E_v\ [J/m^3] = P \times \rho^{-1} \times V_{sp}^{-1} \times t$$

Die bevorzugten Scherenergien betragen vorzugsweise mindestens 7,5 x $10^6$ J/m3, insbesondere mindestens 1 x $10^7$ $J/m^3$. Bevorzugt werden Düsen mit Lochdurchmessern von 0,1 mm bis 5,0 mm, insbesondere von 0,1 bis 2,0 mm eingesetzt.

Die Verweilzeit des Produktes in den entsprechenden Zonen mit hohen Energiedichten beträgt vorzugsweise mindestens 1 x $10^{-6}$ Sekunden, insbesondere 1 x $10^{-5}$ bis 1 Sekunde. Das Kondensat bzw. das Reaktionsgemisch wird vorzugsweise einmal durch mindestens eine Zone mit hoher Energiedichte geführt. In der Regel werden jedoch mehrere Durchgänge durch das Mischaggregat realisiert.

Bevorzugtes Lösungsmittel für das erfindungsgemäße Verfahren ist Wasser, jedoch ist das Verfahren prinzipiell vom Lösungsmittel unabhängig.

Die hohe Energieeintrag erfolgt vorzugsweise bei der Reaktionstemperatur, kann aber auch bei einer anderen Temperatur erfolgen. Bevorzugt erfolgt er bei 20°C bis 150°C.

Das erfindungsgemäße Verfahren ist vorzugsweise dadurch gekennzeichnet, dass als Kondensate wasserlösliche (vorzugsweise >1 g/l bei 20°C) und Aminogruppen-enthaltende Verbindungen ausgewählt werden, die

- Kondensationsprodukte von Alkylendiaminen, von Polyalkylenpolyaminen, von Polyamidoaminen, von mit Ethylenimin gepfropften Polyamidoaminen sowie von deren Mischungen mit mindestens zwei funktionelle Gruppen aufweisenden Vernetzern,

- Kondensationsprodukte von Michaeladditionsprodukten aus Polyalkylenpolyaminen, aus Polyamidoaminen, aus mit Ethylenimin gepfropften Polyamidoaminen sowie deren Mischungen und monoethylenisch ungesättigten Carbonsäuren sowie deren Salzen, Estern, Amiden oder Nitrilen mit mindestens zwei funktionelle Gruppen aufweisenden Vemetzem,

- amidierte Polyethylenimine, die erhältlich sind durch Reaktion von Polyethyleniminen mit einbasischen Carbonsäuren oder ihren Estern, Anhydriden, Säurechloriden oder Säureamiden und gegebenenfalls Kondensation der amidierten Polyethylenimine mit mindestens zwei funktionelle Gruppen aufweisenden Vemetzem,
- Polyethylenimine, quaternisierte Polyethylenimine, phosphonomethylierte Polyethylenimine, alkoxylierte Polyethylenimine und/oder durch Strecker Reaktion carboxymethylierten Polyethylenimine und
- vemetzte alkoxylierte Polyethylenimine, vernetzte, quarternisierte Polyethylenimine, vemetzte phosphonomethylierte Polyethylenimine und/oder vernetzte durch Streckerreaktion carboxymethylierte Polyethylenimine sein können.

Ebenfalls bevorzugt werden nach dem erfindungsgemäßen Verfahren kationische Polyethylenimine oder Polyamidoamine als Kondensate hergestellt, die erhältlich sind durch Umsetzung von

a) ethylengruppenenthaltenden Polyaminen oder deren Umsetzungsprodukten mit organischen, insbesondere aliphatischen oder aromatischen Dicarbonsäuren oder deren Derivaten, insbesondere Anhydriden, Estern oder Säurehalogeniden, aliphatischen oder aromatischen Diisocyanaten oder Alkylenoxiden, insbesondere Ethylenoxid oder Propylenoxid, mit

b) Aminvemetzem, insbesondere 1,2-Dichlorethan, 1,2-Dibrommethan, 1,3-Dibrompropan, 1-Chlor-3-Brompropan und Epichlorhydrin.

Als bevorzugtes Polyamin der Komponente a) wird ein solches der Formel (I) eingesetzt

$$H_2N\text{-}A\text{-}NH_2 \qquad (I),$$

worin

A für einen bivalenten Rest der Formel

$$-(CH_2CH_2N(R))_nCH_2CH_2-$$

steht, mit n = 0 bis 50 und R unabhängig von jeder Wiederholungseinheit n für H, $CH_2CH_2NH_2$,$-CH_2CH_2NRH$ oder für $-(CH_2CH_2N(R))_q$ steht, wobei q für eine Zahl von 0 bis 50 steht und R unabhängig von jeder Wiederholungseinheit die obige Bedeutung besitzen kann.

Besonders bevorzugte Polyamine der Komponente a) sind Diethylentriamin, Triethylentetramin, Tetraethylenpentamin, Pentaethylenhexamin, N-Methyldipropylentriamin oder höher kondensierte, lineare oder verzweigte Komponenten bzw. Mischungen aus diesen Verbindungen.
Bevorzugt sind auch Polyamin-Mischungen oder deren entsprechende Umsetzungsprodukte als Komponente a). Als Polyamin - Mischungen kommen insbesondere solche in Frage, die

| | |
|---|---|
| 20 bis 80 Gew.-% | Hexamine, |
| bis zu 50 Gew.-% | Pentamine, |
| bis zu 30 Gew.-% | Tetramine, |
| bis zu 10 Gew.-% | Niederflüchtige Amine kleiner als Tetramine, insbesondere Diethylentriamin, Ethylendiamin und Aminoethylpiperazin, |
| 5 bis 20 Gew.-% | Heptamine bis Dodekaamine, |
| bis 30 Gew.-% | höhere Amine als Dodekaamine |

enthalten.
Hexamin bedeutet Pentaethylenhexamin oder das entsprechend verzweigte Analoge. Die übrigen Bezeichnungen folgen dieser Systematik.
Bevorzugte aus den ethylengruppenenthaltenden Polyaminen hergestellte Umsetzungsprodukte sind Reaktionsprodukte der Polyamine mit wenigstens bifunktionellen Vemetzem unter Ausbildung von neutralen Zwischenprodukten.

Solche bifunktionellen Vemetzer können sein: Aromatische oder aliphatische Dicarbonsäuren, wie z.B. Terephthalsäure, Bemsteinsäure, Adipinsäure, Sebacinsäure, aromatische oder aliphatische Diisocyanate, wie z.B. Hexamethylendiisocyanat, p-Phenylendiisocyanat, Ethylenoxid, Propylenoxid oder Verbindungen mit unterschiedlichen funktionellen Gruppen, wie z.B. Acrylamid oder Acrylsäure oder halbseitige Umsetzungsprodukte weiterer bifunktioneller Reagenzien, z.B. von Di- oder Polyaminen oder von Di- oder Polyethylenglycolen mit diesen Vernetzern.

Auch trifunktionelle Vemetzer kommen in Frage, wie beispielsweise Cyanurchlorid, Triisocyanate oder Maleinsäureanhydrid.

Bevorzugt werden als Komponente a) Umsetzungsprodukte von Polyaminen mit aliphatischen Dicarbonsäuren zu Polyamidaminen.

Als bevorzugte Polyamidamine der Komponente a) werden die Derivate der Polyamine mit Dicarbonsäuren, insbesondere aliphatischen $C_3$-$C_{10}$-Dicarbonsäuren (wie Bemsteinsäure, Adipinsäure oder Sebacinsäure oder aromatische $C_8$-$C_{15}$-Dicarbonsäuren wie Terephthalsäure) verstanden, wobei Adipinsäure besonders bevorzugt ist.

Bevorzugte Polyamidamine der Komponente a) haben die Formel (II)

$$H_2N-OC(CH_2)_mCONH\left(-A-NHOC(CH_2)_mCO-\right)_pNH_2 \qquad (II),$$

worin

A die obige Bedeutung hat und

m für 1 bis 8, insbesondere 4, steht und

p für eine Zahl von 1000 bis 10000 steht.

Unter Aminvernetzer der Komponente b) wird vorzugsweise eine Verbindung verstanden, die in der Lage ist, zwei Aminogruppen unter Ausbildung von Quartärsalzen zu vernetzen.

Solche Vemetzer können z.B. Dihalogenalkane wie 1,2-Dichlorethan, 1,2-Dibrommethan, 1,3-Dibrompropan oder auch Epichlorhydrin oder die halbseitigen Umsetzungsprodukte dieser bifunktionellen Reagenzien mit als Brükkenstück eingesetzten Komponenten, z.B. Di- oder Polyaminen oder Di- oder Polyglycolen mit diesen Vernetzern sein.

Ebenfalls bevorzugt sind als Kondensate Kondensationsprodukte auf Basis von

A) Aldehyden und/oder Ketonen und gegebenenfalls
B) einer oder mehreren Verbindungen, ausgewählt aus der Gruppe der nicht sulfonierten Aromaten, Harnstoff und Harnstoffderivaten.

Die Erfindung betrifft weiterhin die nach dem erfindungsgemäßen Verfahren erhältlichen Kondensate.

Weiterhin betrifft die Erfindung die Verwendung der erfindungsgemäßen bzw. der nach dem erfindungsgemäßen Verfahren erhaltenen Kondensate als Retentions-, Filtrations-, Entwässerungs- und Fixierhilfsmittel bei der Herstellung von Papier, als Nassfestmittel bei Papier, als Promoter bei der Leimung von Papier mit Alkyldiketenen oder Alkylbernsteinsäureanhydriden, als Flockungsmittel für Klärschlämme, als Haftvermittler bei der Herstellung von Verbundfolien, als Additiv in Haar- und Hautpflegemitteln, als Mittel zur Immobilisierung von anionischen Wirkstoffen und als Mittel zur Echtheitsverbesserung von Textilfärbungen.

**Beispiel 1**

a) 1053 g eines Amingemisches aus 10 % Tetraethylenpentamin, 5 % Triethylentetramin, 47 % Pentaethylenhexamin, 13 % höher siedenden und 25 % nicht flüchtigen Aminen werden mit 461,3 g Adipinsäure bei steigender Temperatur bis 170°C unter Abdestillieren von Reaktionswasser kondensiert.

Das so entstandene Polyamidamin wird auf 1514 g Wasser ausgetragen und in einen Druckreaktor überführt.

b) 585 g der Aminlösung aus Beispiel 1a) werden mit 470 g Wasser verdünnt und bei einer Reaktionstemperatur zwischen 100°C und 130°C mit ca. 15 g Dichlorethan kondensiert. Das Dichlorethan wird dabei in etwa 6 Std. so zudosiert, dass ein eintretender Viskositätsanstieg gut beobachtet werden kann. Sobald ein starker Anstieg der Viskosität auftritt, wird die Dosierung abgebrochen. Durch Entspannen des Überdrucks wird überschüssiges Dichlorethan entfernt. Zur Entfernung aller niedrigflüchtigen Komponenten wird die Reaktionsmischung in einen vorevakuierten Reaktor überführt. Das dabei abdestillierte Wasser wird nach Abkühlen wieder zugesetzt. Man erhält eine hellgelbe Lösung mit einem Feststoffgehalt von 30 % und einer Viskosität von ca. 500 mPas.

c) Das Reaktionsprodukt aus Beispiel 1b wird mit einem Druck von 500 bar durch eine Düse mit einem Durchmesser von 0,2 mm gepresst. Dabei sinkt die Viskosität auf einen Wert von etwa 250 mPas. Das gescherte Produkt wird erneut bei 120°C mit Dichlorethan bis zu einer Viskosität von 500 mPas kondensiert.

d) Man verfährt mit dem Reaktionsprodukt aus Beispiel 1c ebenso wie unter c) beschrieben.

e) Man wiederholt die Vergehensweise unter c) jeweils 4 mal mit dem aus der jeweiligen Vorstufe erhaltenen Reaktionsgemisch.

**Beispiel 2**

Die anwendungstechnische Wirksamkeit der nach den Beispielen 1b bis 1e) hergestellten Polymere wurde in allgemein bekannter Art durch Messung der Beschleunigung der Entwässerungsgeschwindigkeit bestimmt.

Aus 100 Teilen unbedrucktem Altpapier mit einem Füllstoffgehalt von 10 % wurde eine Pulpe mit einer Stoffdichte von 3g/l hergestellt. Als Füllstoff diente 10 % China Clay Grade B. Ein weiteres Additiv war 0,5 % Alaun. Der pH-Wert der Pulpe betrug 7,2. Der Papierstoff wurde in mehrere Portionen geteilt, die dann mit jeweils 0,1 %, 0,2 %, 0,3 %, 0,4 %, 0,5 % und 0,6 % Retentionsmittel versetzt wurden. Die Beschleunigung der Entwässerungsgeschwindigkeit der 6 Konzentrationen wurde zu einer "Gesamtwirksamkeit" arithmetisch gemittelt. Beispiel 1a ist hier Bezugsprobe und wurde auf 100 % gesetzt.

| | |
|---|---|
| Beispiel 1a | 100 % |
| Beispiel 1b | 117% |
| Beispiel 1c | 124 % |
| Beispiel 1d | 126 % |
| Beispiel 1e | 131 % |
| Beispiel 1e (2 x wiederholt) | 135 % |
| Beispiel 1e (3 x wiederholt) | 138 % |
| Beispiel 1e (4 x wiederholt) | 142 % |

Es zeigt sich deutlich, dass die Wirksamkeit der Entwässerungshilfsmittel nach dem erfindungsgemäßen Verfahren deutlich verbessert werden kann.

**Beispiel 3**

In eine Kaskade von 7 Reaktoren, die mit einer Dosiermöglichkeit für Dichlorethan und einer online- Viskositätsmessung ausgestattet sind, wird mit einer Dosiergeschwindigkeit von 0,9 Liter / Stunde eine 24 %ige Lösung einer Polyaminamidschmelze nach Beispiel 1a kontinuierlich eingepumpt. Die Reaktionstemperatur wird in allen Reaktoren auf 120°C gehalten. Gleichzeitig wird Dichlorethan in die Reaktoren eindosiert. Die Dosierungsgeschwindigkeit wird so geregelt, dass sich eine Viskosität zwischen 200 mPas und 400 mPas einstellt. Beim Überführen der Reaktionsmischung in den nächsten Kessel wird jeweils mit einem Druck von mindestens 300 bar durch ein Düsensystem mit einem Lochdurchmesser von 0,2 mm gepresst. In den dritten und in den siebten Reaktor werden zusätzlich 150 ml pro Stunde Wasser eindosiert.

Nach Durchlaufen des siebten Reaktors wird in einen vorevakuierten Sammelbehälter entgast. Das azeotrop abdestillierende, unumgesetzte Dichlorethan kann dem Prozess wieder zugeführt werden. Der Feststoffgehalt des Endproduktes wird auf 20 % eingestellt.

Man erhält ein Produkt mit einer paritätischen Wirksamkeit von 140 %.

**Vergleichsbeispiel 4**

Unterwirft man das Reaktionsprodukt aus Beispiel 1b einer Membranfiltration, so erhält man Produkte mit vergleichbarer Wirkungssteigerung.

| Membran | Feststoffgehalt | Wirksamkeit |
|---|---|---|
| Keramik 0,2 µ | 8,6 % | 135 % |
| 3915 0,4 µ | 9,2% | 137% |
| FP 200 | 12 % | 142 % |

Zur Erniedrigung der Viskosität wurde die Membranfiltration bei einer Temperatur von 60°C durchgeführt.
Um ein Zusetzen der Membran zu vermeiden, musste das Produkt vor der Membranfiltration auf eine Konzentration von 15 % verdünnt werden. Aus 20 kg Ausgangsware wurden 8,6 kg Endkonzentrat einer Konzentration von 12,7 % erhalten, sowie 50 kg Permeat einer Konzentration von 3,8 %.
Vor dem Rückführen des Permeats in eine neue Kondensation gemäß Beispiel 1b muss es nochmals auf eine Konzentration von 25 % aufkonzentriert werden. Dabei fallen ca. 45 kg Abwasser an.

**Patentansprüche**

1. Verfahren zur Herstellung von polymeren Kondensaten, **dadurch gekennzeichnet, dass** die Reaktionsmischung während der Kondensationsreaktion wenigstens einmal durch eine Zone hoher Energiedichte geführt wird, die eine Energiedichte von wenigstens $10^5$ J/m$^3$ aufweist.

2. Verfahren gemäß Anspruch 1, **dadurch gekennzeichnet, dass** die Zone hoher Energiedichte mindestens 2 x durchlaufen wird.

3. Verfahren gemäß Anspruch 1, **dadurch gekennzeichnet, dass** die Energiedichte mindestens 7,5 x $10^6$ J/m$^3$ beträgt.

4. Verfahren gemäß Anspruch 1, **dadurch gekennzeichnet, dass** die Energiedichte mindestens 1 x $10^7$ J/m$^3$ beträgt.

5. Verfahren gemäß Anspruch 1, **dadurch gekennzeichnet, dass** als Kondensate wasserlösliche und Aminogruppen enthaltende Verbindungen ausgewählt werden, die

    - Kondensationsprodukte von Alkylendiaminen, von Polyalkylenpolyaminen, von Polyamidoaminen, von mit Ethylenimin gepfropften Polyamidoaminen sowie von deren Mischungen mit mindestens zwei funktionelle Gruppen aufweisenden Vernetzern,

    - Kondensatiionsprodukte von Michaeladditionsprodukten aus Polyalkylenpolyaminen, aus Polyamidoaminen, aus mit Ethylenimin gepfropften Polyamidoaminen sowie deren Mischungen und monoethylenisch ungesättigten Carbonsäuren sowie deren Salzen, Estern, Amiden oder Nitrilen mit mindestens zwei funktionellen Gruppen aufweisenden Vemetzem,

    - amidierte Polyethylenimine, die erhältlich sind durch Reaktion von Polyethyleniminen mit einbasischen Carbonsäuren oder ihren Estern, Anhydriden, Säurechloriden oder Säureamiden und gegebenenfalls Kondensation der amidierten Polyethylenimine mit mindestens zwei funktionelle Gruppen aufweisenden Vernetzern,

    - Polyethylenimine, quaternisierte Polyethylenimine, phosphonomethylierte Polyethylenimine, alkoxylierte Polyethylenimine und/oder durch Strecker - Reaktion carboxymethylierte Polyethylenimine und

    - vernetzte alkoxylierten Polyethylenimine, vernetzte, quarternisierte Polyethylenimine, vernetzte, phosphonomethylierte Polyethylenimine und/oder vernetzte, durch Strecker - Reaktion carboxymethylierte Polyethylenimine sein können.

6. Verfahren gemäß Anspruch 1, **dadurch gekennzeichnet, dass** als Kondensate kationische Polyethylenimine hergestellt werden, erhältlich durch Umsetzung von

a) ethylengruppenenthaltenden Polyaminen oder deren Umsetzungsprodukten mit organischen, insbesondere aliphatischen oder aromatischen Mono- oder Dicarbonsäuren oder deren Derivaten, insbesondere Anhydriden, Estern oder Säurehalogeniden, aliphatischen oder aromatischen Mono- oder Diisocyanaten oder Alkylenoxiden, insbesondere Ethylenoxid oder Propylenoxid, mit

b) Aminvernetzern, insbesondere 1,2-Dichlorethan, 1,2-Dibrommethan, 1,3-Dibrompropan, 1-Chlor-3-Brompropan und Epichlorhydrin.

**7.** Verfahren gemäß Anspruch 6, **dadurch gekennzeichnet, dass** als Polyamin der Komponente a) solches der Formel I eingesetzt wird

$$H_2N\text{-}A\text{-}NH_2 \quad (I),$$

worin

A für einen bivalenten Rest der Formel

$$-(CH_2CH_2N(R))_nCH_2CH_2-$$

steht, mit n = 0 bis 50 und R unabhängig von jeder Wiederholungseinheit n für H, $CH_2CH_2NH_2$,$-CH_2CH_2NRH$ oder für $-(CH_2CH_2N(R))q$ steht, wobei q für eine Zahl von 0 bis 50 steht und R unabhängig von jeder Wiederholungseinheit die obige Bedeutung besitzen kann.

**8.** Verfahren gemäß Anspruch 1, **dadurch gekennzeichnet, dass** die hohe Energiedichte kontinuierlich oder diskontinuierlich auf die Reaktionsmischung einwirkt.

**9.** Verfahren gemäß Anspruch 1, **dadurch gekennzeichnet, dass** die hohe Energiedichte bei einer Viskosität der Reaktionsmischung von größer 200 mPas durchgeführt wird.

**10.** Polymere Kondensate erhältlich nach wenigstens einem der vorhergehenden Ansprüche.

**11.** Verwendung der polymeren Kondensate nach Anspruch 10 als Filtrations-, Entwässerungs- und Fixierhilfsmittel bei der Herstellung von Papier, als Promoter bei der Leimung von Papier mit Alkyldiketenen oder Alkylbernsteinsäureanhydriden, als Flockungsmittel für Klärschlämme, als Haftvermittler bei der Herstellung von Verbundfolien, als Additiv in Haar- und Hautpflegemitteln, als Mittel zur Immobilisierung von anionischen Wirkstoffen und als Mittel zur Echtheitsverbesserung von Textilfärbungen.

Europäisches Patentamt

# EUROPÄISCHER RECHERCHENBERICHT

Nummer der Anmeldung
EP 03 01 1879

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 97 21760 A (BASF AG ;STEUERLE ULRICH (DE); REUTHER WOLFGANG (DE); HARDER WOLFG) 19. Juni 1997 (1997-06-19) * Seite 1, Zeile 7-10 * * Seite 2, Zeile 20-39 * * Seite 3, Zeile 24 - Seite 5, Zeile 14; Ansprüche; Beispiele * | 1-11 | C08G73/02 B01J19/18 B01J19/24 B01F5/02 |
| Y | EP 0 411 400 A (BAYER AG) 6. Februar 1991 (1991-02-06) | 1-9 | |
| X | * Seite 2, Zeile 1-4 * * Seite 3, Zeile 7 - Seite 5, Zeile 33; Ansprüche; Beispiele * | 10,11 | |
| Y,D | WO 02 068502 A (PIELARTZIK HARALD ;STEINLEIN CHRISTIAN (DE); HOFMANN JOERG (DE); O) 6. September 2002 (2002-09-06) * Seite 2, Zeile 29 - Seite 3, Zeile 5 * * Seite 5, Zeile 5 - Seite 8, Zeile 25; Ansprüche; Abbildungen; Beispiele * | 1-9 | |
| X,P | WO 03 006529 A (ESTUR JEAN-FRANCOIS ;RHODIANYL (FR); GAILLARD CECILE (FR); HELFT M) 23. Januar 2003 (2003-01-23) | 1-4,8-10 | RECHERCHIERTE SACHGEBIETE (Int.Cl.7) |
| Y | * Seite 4, Zeile 1 - Seite 5, Zeile 3 * * Seite 7, Zeile 23-29 * * Seite 9, Zeile 1-6 * * Seite 12, Zeile 34 - Seite 13, Zeile 5; Anspruch 28; Abbildung * | 5-7 | C08G B01J B01F |
| X | WO 99 61511 A (SOLUTIA INC) 2. Dezember 1999 (1999-12-02) | 1-4,8-10 | |
| Y | * Seite 5, Zeile 10 - Seite 10, Zeile 26; Ansprüche; Abbildungen; Beispiele * | 5-7 | |

-/--

Der vorliegende Recherchenbericht wurde für alle Patentansprüche erstellt

| Recherchenort | Abschlußdatum der Recherche | Prüfer |
|---|---|---|
| MÜNCHEN | 23. Juli 2003 | Otegui Rebollo, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt

# EUROPÄISCHER RECHERCHENBERICHT

Nummer der Anmeldung
EP 03 01 1879

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X,D | DE 196 00 366 A (BASF AG)<br>10. Juli 1997 (1997-07-10)<br>* Seite 2, Zeile 3-8 *<br>* Seite 2, Zeile 67 - Seite 3, Zeile 7; Ansprüche; Beispiele *<br>----- | 10,11 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| MÜNCHEN | 23. Juli 2003 | Otegui Rebollo, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 03 01 1879

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2003

| Im Recherchenbericht angeführtes Patentdokument | Datum der Veröffentlichung | Mitglied(er) der Patentfamilie | Datum der Veröffentlichung |
|---|---|---|---|
| WO 9721760 A | 19-06-1997 | DE 19545874 A1 | 12-06-1997 |
| | | WO 9721760 A1 | 19-06-1997 |
| | | EP 0865459 A1 | 23-09-1998 |
| | | JP 2000501757 T | 15-02-2000 |
| | | US 5977293 A | 02-11-1999 |
| EP 0411400 A | 06-02-1991 | DE 3925439 A1 | 07-02-1991 |
| | | DE 59007821 D1 | 12-01-1995 |
| | | EP 0411400 A2 | 06-02-1991 |
| WO 02068502 A | 06-09-2002 | DE 10108485 A1 | 05-09-2002 |
| | | WO 02068502 A1 | 06-09-2002 |
| | | US 2002198278 A1 | 26-12-2002 |
| WO 03006529 A | 23-01-2003 | FR 2827294 A1 | 17-01-2003 |
| | | WO 03006529 A1 | 23-01-2003 |
| WO 9961511 A | 02-12-1999 | AU 759321 B2 | 10-04-2003 |
| | | AU 4208999 A | 13-12-1999 |
| | | BR 9910795 A | 13-02-2001 |
| | | CA 2333260 A1 | 02-12-1999 |
| | | CN 1312832 T | 12-09-2001 |
| | | EE 200000696 A | 15-04-2002 |
| | | EP 1080130 A1 | 07-03-2001 |
| | | HU 0102018 A2 | 28-10-2001 |
| | | JP 2002516366 T | 04-06-2002 |
| | | NO 20006014 A | 25-01-2001 |
| | | PL 344409 A1 | 05-11-2001 |
| | | SK 17612000 A3 | 10-05-2001 |
| | | TR 200003532 T2 | 21-09-2001 |
| | | TW 498089 B | 11-08-2002 |
| | | WO 9961511 A1 | 02-12-1999 |
| DE 19600366 A | 10-07-1997 | DE 19600366 A1 | 10-07-1997 |
| | | AT 186932 T | 15-12-1999 |
| | | AU 711553 B2 | 14-10-1999 |
| | | AU 1309497 A | 01-08-1997 |
| | | BR 9706970 A | 06-04-1999 |
| | | CA 2240466 A1 | 17-07-1997 |
| | | CN 1212713 A ,B | 31-03-1999 |
| | | DE 59700753 D1 | 30-12-1999 |
| | | WO 9725367 A1 | 17-07-1997 |
| | | EP 0873371 A1 | 28-10-1998 |
| | | ES 2140954 T3 | 01-03-2000 |
| | | JP 2000505124 T | 25-04-2000 |
| | | NO 983128 A | 07-09-1998 |

EPO FORM P0461

Für nähere Einzelheiten zu diesem Anhang : siehe Amtsblatt des Europäischen Patentamts, Nr.12/82

## ANHANG ZUM EUROPÄISCHEN RECHERCHENBERICHT ÜBER DIE EUROPÄISCHE PATENTANMELDUNG NR. EP 03 01 1879

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-07-2003

| Im Recherchenbericht angeführtes Patentdokument | Datum der Veröffentlichung | Mitglied(er) der Patentfamilie | Datum der Veröffentlichung |
|---|---|---|---|
| DE 19600366 A | | NZ 325851 A | 29-06-1999 |
| | | PT 873371 T | 31-05-2000 |
| | | US 6056967 A | 02-05-2000 |

EPO FORM P0461

Für nähere Einzelheiten zu diesem Anhang : siehe Amtsblatt des Europäischen Patentamts, Nr.12/82